# EUROPÄISCHE PATENTANMELDUNG

(11) **EP 1 777 931 A1**
(43) Veröffentlichungstag der Anmeldung: **25.04.2007**
(21) Anmeldenummer: 05023088.7
(22) Anmeldetag: 22.10.2005
(51) Int. Cl.: H04M 15/00, H04M 15/08

(54) **Verfahren zum Weiterführen eines Telefongesprächs durch Erzeugung einer R-Gespräch-Telefonverbindung bei aufgebrauchtem Calling-Karten-Guthaben**

(71) Anmelder: CALLAX Telecom Holding GmbH, 40211 Düsseldorf (DE)
(72) Erfinder: Varol, Ömer Kaan, 40468 Düsseldorf (DE)
(74) Vertreter: Stenger, Watzke & Ring

(57) **Zusammenfassung**

Die Erfindung betrifft ein Verfahren zum Erzeugen einer R-Gespräch-Telefonverbindung zwischen einem mit einer Calling-Karte betriebenen Telefon eines Kunden und einem Telefon eines Dritten, wenn sich das der Calling-Karte zugeordnete Guthaben während eines Telefonats zwischen dem Kunden und dem Dritten erschöpft, umfassend die Schritte: Halten der Telefonverbindung zwischen dem Telefon des Kunden und dem Telefon des Dritten durch einen Verfahrensanbieter, wenn sich das der Calling-Karte zugeordnete Guthaben während des Telefonats erschöpft, und Erzeugen einer R-Gespräch-Telefonverbindung zwischen dem Telefon des Kunden und dem Telefon des Dritten durch den Verfahrensanbieter.

## Beschreibung

Die vorliegende Erfindung betrifft ein Verfahren zum Erzeugen einer R-Gespräch-Telefonverbindung zwischen einem mit einer Calling-Karte betriebenen Telefon eines Kunden und zumindest einem weiteren Telefon eines Dritten, wenn sich das der Calling-Karte zugeordnete Guthaben während eines Telefonats zwischen dem Kunden und dem Dritten erschöpft.

Bei sogenannten Calling-Karten wird ein vorbestimmter Betrag in Form eines Guthabens auf einer Calling-Karte gespeichert, das vom Kunden nach Belieben von verschiedenen Telefonen aus abtelefoniert werden kann. Dazu wählt der Kunde normalerweise eine vorbestimmte Nummer des Systembetreibers und übermittelt eine der Calling-Karte zugeordnete PIN-Nummer an den Systembetreiber, woraufhin das danach geführte Telefonat über die Calling-Karte abgerechnet wird. Sobald das Guthaben aufgebraucht ist, muß der Kunde seine Calling-Karte beim Systembetreiber wieder aufladen bzw. sich eine neue Calling-Karte kaufen, um diese wieder nutzen zu können. Derartige Calling-Karten weisen insbesondere eine sehr gute Kostentransparenz auf. Der Kunde kann stets seine Telefonkosten kontrollieren, weshalb unerwartet hohe Telefonrechnungen ausbleiben.

Nachteilig ist hingegen, daß nach Aufbrauchen des der Calling-Karte zugeordneten Guthabens ein Telefonieren unter Verwendung der Calling-Karte nicht länger möglich ist. Probleme können somit dann entstehen, wenn sich der Kunde in einer Notsituation befindet und über ein Telefon Hilfe rufen möchte. In ganz dringenden Fällen sollte daher zumindest der Verbindungsaufbau zu Notrufzentralen, wie beispielsweise Polizei oder Feuerwehr möglich sein, was häufig auch durch den Systembetreiber durch ein Freischalten derartiger Notrufnummern gewährleistet ist. Aber auch in weniger dringenden Fällen kann es für den Kunden in rein subjektiver Hinsicht sehr wichtig sein, ein bereits angefangenes Gespräch fortzusetzen, auch wenn sich das der Calling-Karte zugeordnete Guthaben während des Gesprächs erschöpft.

Für solche Fälle wurden Verfahren entwickelt, bei denen der Kunde bei aufgebrauchtem Guthaben über sein Telefon eine sogenannte R-Gespräch-Anfrage generieren kann. Ein R-Gespräch zeichnet sich dadurch aus, daß die Gesprächskosten nicht dem Anrufer sondern dem Angerufenen in Rechnung gestellt werden.

Wird beispielsweise eine Verbindung zwischen dem Kunden und einem Dritten verfahrensanbieterseitig unterbrochen, da sich das der Calling-Karte des Kunden zugeordnete Guthaben während des Gesprächs erschöpft hat, so kann der Kunde eine neue Telefonverbindung zum Verfahrensanbieter herstellen, um sich über diesen erneut mit dem Dritten verbinden zu lassen und das angefangene Telefonat im Rahmen eines R-Gesprächs fortzusetzen. Dazu wählt der Kunde auf seinem Telefon eine vorbestimmte, meist kostenfreie Telefonnummer des Verfahrensanbieters und übermittelt an diesen die Telefonnummer des Dritten, mit dem die R-Gespräch-Telefonverbindung aufgebaut werden soll. Der Verfahrensanbieter kontaktiert daraufhin den Dritten und stellt fest, ob dieser zur Annahme des Gesprächs und zur Übernahme der Kosten bereit ist. Ist dies der Fall, so wird verfahrensanbieterseitig eine R-Gespräch-Telefonverbindung zwischen dem Kunden und dem Dritten hergestellt, so daß diese ihr angefangenes Gespräch fortsetzen können.

Derartige R-Gespräch-Telefonverbindungen haben sich in der Vergangenheit bewährt. Nachteilig ist allerdings, daß der Kunde zunächst einmal wissen muß, daß überhaupt die Möglichkeit besteht, sich im Rahmen eines R-Gesprächs mit einem Dritten verbinden zu lassen. Ferner muß er Zugriff auf die vorbestimmte Telefonnummer des Verfahrensanbieters haben. Schließlich ist eine bestimmte Zeitspanne erforderlich, um nach verfahrensanbieterseitigem Abbruch der Telefonverbindung zwischen dem Kunden und dem Dritten aufgrund des erschöpften Calling-Karten-Guthabens eine neue R-Gespräch-Telefonverbindung zwischen den Gesprächspartnern aufzubauen. Während dieser Zeitspanne kann ein Dritter, der nicht mit der Möglichkeit eines darauffolgenden R-Gesprächs rechnet, beispielsweise das Haus verlassen, so daß er nicht länger erreichbar ist.

Es ist eine **Aufgabe** der vorliegenden Erfindung, ein verbessertes Verfahren zum Erzeugen einer R-Gespräch-Telefonverbindung zwischen einem mit einer Calling-Karte betriebenen Telefon eines Kunden und zumindest einem weiteren Telefon eines Dritten zu schaffen, wenn sich das der Calling-Karte zugeordnete Guthaben während eines Telefonats zwischen dem Kunden und dem Dritten erschöpft.

Diese Aufgabe wird gemäß der vorliegenden Erfindung durch ein Verfahren zum Erzeugen einer R-Gespräch-Telefonverbindung nach Anspruch 1 **gelöst**. Die abhängigen Ansprüche beziehen sich auf individuelle Ausgestaltungen des erfindungsgemäßen Verfahrens.

Gemäß der vorliegenden Erfindung wird eine Telefonverbindung zwischen einem mit einer Calling-Karte betriebenen Telefon eines Kunden und zumindest einem Telefon eines Dritten verfahrensanbieterseitig gehalten, wenn sich das der Calling-Karte zugeordnete Guthaben während des Gesprächs erschöpft. Daraufhin wird durch den Verfahrensanbieter eine R-Gespräch-Telefonverbindung zwischen den beiden Teilnehmern erzeugt, so daß diese das angefangene Telefonat fortsetzen können.

Der wesentliche Vorteil des erfindungsgemäßen Verfahrens gegenüber den bekannten Verfahren besteht darin, daß die Telefonverbindung zwischen dem Kunden und dem Dritten zunächst verfahrensanbieterseitig gehalten wird, wenn sich das der Calling-Karte zugeordnete Guthaben während des Gesprächs erschöpft. Während die Verbindung gehalten wird, kann der Kunde vom Verfahrensanbieter darüber informiert werden, daß der Aufbau einer R-Gespräch-Telefonverbindung möglich ist. Auch kann der Kunde unmittelbar in die Lage versetzt werden, eine R-Gespräch-Anfrage zu generieren, vorzugsweise nach Aufforderung durch den Verfahrensanbieter und durch Betätigen einer vorbestimmten Taste auf seinem Telefon. Es ist also nicht länger erforderlich, daß der Kunde Zugriff auf eine entsprechende Telefonnummer des Verfahrensbetreibers hat, um eine R-Gespräch-Anfrage zu generieren, da er bereits mit dem Verfahrensanbieter verbunden ist. Auch nimmt der Aufbau der R-Gespräch-Verbindung nur wenig Zeit in Anspruch, da ja bereits eine Telefonverbindung mit dem Dritten besteht. Es muß lediglich der Abrechnungsmodus der bestehenden Verbindung geändert werden.

Zeitgleich kann der Dritte aufgefordert werden, den Telefonhörer nicht aufzulegen und abzuwarten, ob kundenseitig eine R-Gespräch-Anfrage generiert wird. Auf diese Weise wird auch der Dritte auf die Möglichkeit einer R-Gespräch-Verbindung hingewiesen.

Generiert nun der Kunde eine R-Gespräch-Anfrage, so wird der Dritte bevorzugt gefragt, ob er das R-Gespräch annehmen und die Kosten des Gesprächs übernehmen will. Ist dies der Fall, so wird verfahrensanbieterseitig eine R-Gespräch-Telefonverbindung zwischen den Teilnehmern erzeugt. Wird hingegen keine Anfrage generiert, so wird dies dem Dritten mitgeteilt und anschließend die Verbindung zwischen dem Kunden und dem Dritten verfahrensanbieterseitig endgültig unterbrochen.

Es sollte klar sein, daß das erfindungsgemäße Verfahren modifiziert werden kann, ohne den Schutzbereich der vorliegenden Erfindung zu verlassen, der durch die beiliegenden Ansprüche definiert ist.

## Patentansprüche

1. Verfahren zum Erzeugen einer R-Gespräch-Telefonverbindung zwischen einem mit einer Calling-Karte betriebenen Telefon eines Kunden und einem Telefon eines Dritten, wenn sich das der Calling-Karte zugeordnete Guthaben während eines Telefonats zwischen dem Kunden und dem Dritten erschöpft, umfassend die Schritte:
- Halten der Telefonverbindung zwischen dem Telefon des Kunden und dem Telefon des Dritten durch einen Verfahrensanbieter, wenn sich das der Calling-Karte zugeordnete Guthaben während des Telefonats erschöpft, und
- Erzeugen einer R-Gespräch-Telefonverbindung zwischen dem Telefon des Kunden und dem Telefon des Dritten durch den Verfahrensanbieter.

2. Verfahren nach Anspruch 1, bei dem der Kunde eine R-Gespräch-Anfrage generiert, während die Telefonverbindung verfahrensanbieterseitig gehalten wird.

3. Verfahren nach Anspruch 2, bei dem die Anfrage durch Betätigen einer Taste des Telefons des Kunden generiert wird.

## Geänderte Patentansprüche

### Geänderte Patentansprüche gemäss Regel 86(2) EPÜ.

**1.** Verfahren zum Erzeugen einer R-Gespräch-Telefonverbindung zwischen einem mit einer Calling-Karte betriebenen Telefon eines Kunden und einem Telefon eines Dritten, wenn sich das der Calling-Karte zugeordnete Guthaben während eines Telefonats zwischen dem Kunden und dem Dritten erschöpft, umfassend die Schritte:
- Halten der Telefonverbindung zwischen dem Telefon des Kunden und dem Telefon des Dritten durch einen Verfahrensanbieter, wenn sich das der Calling-Karte zugeordnete Guthaben während des Telefonats erschöpft, wobei der Kunde vom Verfahrensanbieter darüber informiert wird, daß der Aufbau einer R-Gespräch-Telefonverbindung möglich ist, und
- Erzeugen einer R-Gespräch-Telefonverbindung zwischen dem Telefon des Kunden und dem Telefon des Dritten durch den Verfahrensanbieter, wobei der Dritte zuvor danach befragt wird, ob er die Kosten der R-Gespräch-Telefonverbindung übernimmt,
wobei der Kunde eine R-Gespräch-Anfrage nach Aufforderung durch den Verfahrensanbieter generiert, während die Telefonverbindung verfahrensanbieterseitig gehalten wird, indem die Anfrage durch Betätigung einer Taste des Telefons des Kunden generiert wird, wobei der Dritte zeitgleich auf die Möglichkeit einer R-Gespräch-Verbindung hingewiesen und aufgefordert wird, abzuwarten, ob seitens des Kunden eine R-Gespräch-Anfrage generiert wird und wobei für den Fall, daß seitens des Kunden keine R-Gespräch-Anfrage generiert wird, dem Dritten dies mitgeteilt wird und anschließend die Verbindung zwischen dem Telefon des Kunden und dem Telefon des Dritten unterbrochen wird.
